# EUROPÄISCHE PATENTSCHRIFT

(11) **EP 0 425 979 B1**
(45) Veröffentlichungstag und Bekanntmachung des Hinweises auf die Patenterteilung: **19.04.1995**
(21) Anmeldenummer: 90120300.0
(22) Anmeldetag: 23.10.1990
(51) Int. Cl.: G02B 6/44

(54) **Flexibles optisches Kabel**
Flexible fibre optic cable
Câble flexible à fibres optiques

(30) Priorität: 28.10.1989 DE 3935986
(43) Veröffentlichungstag der Anmeldung: 08.05.1991
(73) Patentinhaber: KABEL RHEYDT Aktiengesellschaft, D-41179 Mönchengladbach (DE)
(72) Erfinder: Zamzow, Peter, W-4630 Bochum 1 (DE); Delâge, Peter, W-4053 Jüchen 5 (DE); Diehl, Bernhard, W-4050 Mönchengladbach 3 (DE); Haag, Helmut, W-5177 Titz 1 (DE)
(74) Vertreter: Mende, Eberhard, Dipl.-Ing.

(56) Entgegenhaltungen:
- EP-A- 0 261 675
- DE-A- 2 551 210
- DE-A- 3 807 269
- FR-A- 2 483 628
- US-A- 4 143 942

## Beschreibung

Die Erfindung betrifft ein optisches Kabel nach dem Oberbegriff des Anspruches 1. Solche Kabel sind bereits bekannt (US-PS 41 43 942), hierbei sind um ein zentrales Kern- oder Tragelement sog. Bündeladern mit einer oder mehreren optischen Fasern und einer ausreichend steifen Schutzhülle verseilt. Bei Baggern und Bandstraßen, welche ortsveränderliche Stromverbraucher darstellen, ist jedoch nicht nur die Stromversorgung über flexible Kabel sicherzustellen, sondern auch die Informationsübertragung. Informationen werden heute über optische Fasern übermittelt, da sie in Bezug auf die Störsicherheit wirtschaftlich und konkurrenzlos sind.

Der Erfindung liegt daher die Aufgabe zugrunde, ein längswasserdichtes, metallfreies und flexibles optisches Kabel zu schaffen, welches zum Schutz des Nachrichtenteils gegen äußere Beschädigungen eine Armierung enthält. Diese Aufgabe wird bei einem optischen Kabel der eingangs erwähnten Art nach der Erfindung durch die im Kennzeichen des Anspruches 1 aufgeführten Merkmale gelöst.

Einsatzgebiete der Erfindung sind vorzugsweise der Braunkohlen-Tagebau, wo das Kabel als hochflexibles, mobiles Kabel eingesetzt werden kann. Insbesondere ist das Kabel gegen eindringende Schweißperlen, welche bei Schweißarbeiten entstehen können, geschützt. Das Kabel muß insbesondere metallfrei sein, da es gemeinsam mit Starkstromkabeln verlegt werden soll.

Das Kabel besteht aus einem zentralen Zugentlastungselement, um das bis zu acht optische Adern verseilt werden können. Die Kabelseele ist zur Längswasserdichtigkeit beispielsweise mit Petrolat gefüllt und von einer Glaszugentlastung umgeben. Den Mantel bildet eine etwa 2 mm dicke Polyurethanschicht, wodurch das Kabel insgesamt etwa 10 cm Stärke besitzt. Um dem Kabel eine niedrige Biegesteifigkeit bei der losen, mäanderförmigen Verlegung zu geben, wurde als zentrales Zugelement ein kunststoffumhüllter, zugfester, aber weicher und nichtelastischer Zwirn verwendet. Dadurch bedingt, wird die optische Faser mit einer festen Hülle eingschlossen, welche unmittelbar auf der Faser aufliegt und etwa 0,9 mm Durchmesser besitzt. Hiermit wird eine niedrige Querdruckempfindlichkeit und damit ein geringer Einfluß von Stauchkräften auf die Faserdämpfung erreicht. Diese Adern werden relativ locker mit kurzem Schlag um das zentrale Element verseilt, um so die geeignete Faserlagerung im Kabel und Zug- und Temperaturbelastung zu gewährleisten. Die Kabelseele wird vorzugsweise mit Petrolat gefüllt und von einer zweilagigen Schicht Zugentlastungselementen aus Glasfilament verstärkt und gleichzeitig gepolstert. Diese zweilagige Glasarmierung wird bezüglich der Schlaglänge so ausgelegt, daß das Kabel bei Zugkraft torsionsfrei bleibt. Dennoch ist es sehr gut biegbar.

Der Mantel wurde aus Polyurethan (PUR) hergestellt. Dieses Material ist bezüglich Abrieb, Ölbeständigkeit und Kältebiegung günstiger als Polyvinylchlorid (PVC) und wurde bezüglich der Mischung flammwidrig eingestellt. Insbesondere ist diese Mischung gegen Schweißperlen resistent, so daß Schweißarbeiten in der Nähe des Kabels durchgeführt werden können.

Bei dem optischen Kabel entsprechend der Fig. besteht der Kern 1, auf den die Volladern 7 aufgeseilt sind, aus Fasern 2 aus Glas und/oder Aramid, die in einer Masse eingebettet sind, und einer Kunststoffhülle 4. Mit 8 ist eine Bebänderung bezeichnet, über der die Zugentlastungsschicht 5 angeordnet ist, sie besteht beispielsweise aus zwei im Gegenschlag aufgebrachten Lagen von Glasrovings.

Entsprechend dem Durchmesser des Außenmantels 6 von etwa 12 bis 20 mm ist die Zugentlastungsschicht 1,2 mm bis 1,6 mm dick. Geht man zu einem größeren Durchmesser des Außenmantels 6 von etwa 18 mm bis 30 mm über, wird man eine Dicke für die Zugentlastungsschicht von 1,4 mm bis 3,0 mm wählen.

Zur Erzielung der Längswasserdichtigkeit der Zugentlastungsschicht 5 besteht der Füllstoff aus Quellpulver, zwischen den verseilten optischen Adern 7 wird man eine Füllmasse 13 vorsehen, etwa Petrolat.

Der Mantel 6 besteht aus Polyurethan wegen der erhöhten Abriebfestigkeit, Ölbeständigkeit und Kältebegiegung, durch Zumischung von Oxidhydraten ist die Mischung flammwidrig einstellbar.

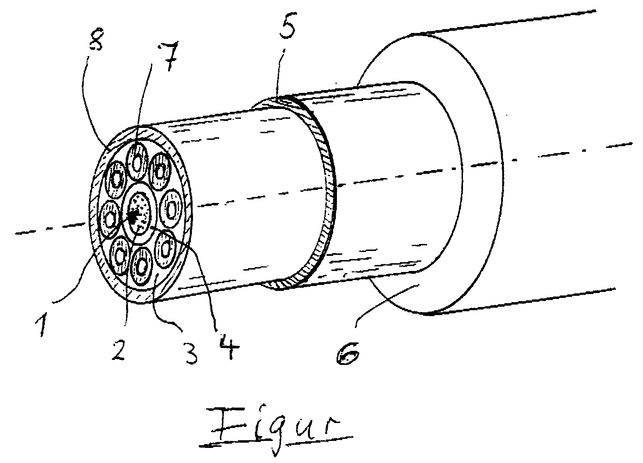

## Patentansprüche

1. Metallfreies optisches Kabel mit um einen Kern (1) verseilten optischen Adern (7) mit einer über den Adern (7) angebrachten Behänderung (8), über welcher eine Zugentlastungsschicht (5) angeordnet ist und mit einem Außenmantel (6), dadurch gekennzeichnet, daß der Kern (1) aus mit großem Schlag verseilten, gegeneinander verschiebbaren Fasern (2) aus Glas und/oder Aramid besteht, die in eine Masse eingebettet und von einer Kunststoffhülle (4) umschlossen sind, auf der optische Volladern aufgeseilt sind, und daß die Zugentlastungsschicht (5) aus einer mindestens 1 mm dicken Schicht aus Glasfasern und einem Füllstoff zur Erzielung der Längswasserdichtigkeit besteht.

2. Optisches Kabel nach Anspruch 1, dadurch gekennzeichnet, daß die Zugentlastungsschicht (5) aus zwei im Gegenschlag aufgebrachten Lagen von Glasrovings besteht.

3. Optisches Kabel nach Anspruch 1 oder 2, dadurch gekennzeichnet, daß die Zugentlastungsschicht (5) 1,2 mm bis 1,6 mm dick ist bei einem Durchmesser des Außenmantels (6) von etwa 12 bis 20 mm.

4. Optisches Kabel nach Anspruch 1 oder 2, dadurch gekennzeichnet, daß die Zugentlastungsschicht (5) 1,4 mm bis 3,0 mm dick ist bei einem Durchmesser des Außenmantels (6) von 18 mm bis 30 mm.

5. Optisches Kabel nach einem der Ansprüche 1 bis 4, dadurch gekennzeichnet, daß der Füllstoff ein Quellpulver ist.

6. Optisches Kabel nach einem der Ansprüche 1 bis 5, dadurch gekennzeichnet, daß der Außen-Mantel (6) aus einem mit Oxidhydraten gefüllten Polymer besteht.

7. Optisches Kabel nach einem der Ansprüche 1 bis 6, dadurch gekennzeichnet, daß der Außen-Mantel (6) aus Polyurethan besteht.

8. Optisches Kabel nach einem der Ansprüche 1 bis 7, dadurch gekennzeichnet, daß zwischen den verseilten optischen Adern (7) eine Füllmasse (13) eingebracht ist.

## Claims

1. Metal-free optical cable having optical strands (7) twisted around a core (1) having strapping (8) applied over the strands (7), over which a strain-relief layer (5) is arranged and having an outer sheath (6), characterized in that the core (1) consists of mutually displaceable fibres (2) twisted with a large lay and made of glass and/or aramide, which are embedded in a compound and are enclosed by a plastic sleeve (4), on which optical solid strands are twisted, and in that the strain-relief layer (5) consists of a layer at least 1 mm thick of glass fibres and a filling material for achieving longitudinal water-tightness.

2. Optical cable according to Claim 1, characterized in that the strain-relief layer (5) consists of two layers of glass rovings applied with opposite lay.

3. Optical cable according to Claim 1 or 2, characterized in that the strain-relief layer (5) is 1.2 mm to 1.6 mm thick at a diameter of the outer sheath (6) of approximately 12 to 20 mm.

4. Optical cable according to Claim 1 or 2, characterized in that the strain-relief layer (5) is 1.4 mm to 3.0 mm thick at a diameter of the outer sheath (6) of 18 mm to 30 mm.

5. Optical cable according to one of Claims 1 to 4, characterized in that the filling material is an intumescent powder.

6. Optical cable according to one of Claims 1 to 5, characterized in that the outer sheath (6) consists of a polymer filled with hydrated oxides.

7. Optical cable according to one of Claims 1 to 6, characterized in that the outer sheath (6) consists of polyurethane.

8. Optical cable according to one of Claims 1 to 7, characterized in that a filling compound (13) is introduced between the twisted optical strands (7).

## Revendications

1. Câble optique exempt de métal comportant des conducteurs (7) optiques toronnés autour d'un noyau (1), un rubanage (8) placé sur les conducteurs (7), sur lequel une couche de décharge de traction (5) est disposée, et une gaine extérieure (6), caractérisé en ce que le noyau (1) se compose de fibres (2) mobiles en verre et/ou aramide, qui sont insérées dans une masse et entourées d'une enveloppe en matière plastique (4), sur laquelle des fibres optiques avec gainage serré sont toronnées, et en ce que la couche de décharge de traction (5) se compose d'une couche en fibres de verre, ayant une épaisseur d'au moins 1 mm, et d'un matériau de remplissage afin d'obtenir une imperméabilité permanente à l'eau.

2. Câble optique selon la revendication 1, caractérisé en ce que la couche de décharge de traction (5) se compose de deux couches de stratifil de verre textile placées en alternance.

3. Câble optique selon la revendication 1 ou 2, caractérisé en ce que la couche de décharge de traction (5) a une épaisseur de 1,2 mm à 1,6 mm pour un diamètre de la gaine extérieure (6) d'environ 12 à 20 mm.

4. Câble optique selon la revendication 1 ou 2, caractérisé en ce que la couche de décharge de traction (5) a une épaisseur de 1,4 mm à 3,0 mm pour un diamètre de la gaine extérieure (6) de 18 mm à 30 mm.

5. Câble optique selon l'une des revendications 1 à 4, caractérisé en ce que le matériau de remplissage est une poudre expansive.

6. Câble optique selon l'une des revendications 1 à 5, caractérisé en ce que la gaine extérieure (6) se compose d'un polymère rempli avec des hydrates d'oxyde.

7. Câble optique selon l'une des revendications 1 à 6, caractérisé en ce que la gaine extérieure (6) se compose de polyuréthanne.

8. Câble optique selon l'une des revendications 1 à 7, caractérisé en ce que, entre les conducteurs optiques (7) toronnés, une masse de remplissage (13) est mise en place.
